# EUROPEAN PATENT APPLICATION

(11) **EP 1 036 665 A1**
(43) Date of publication of application: **20.09.2000**
(21) Application number: 99970056.0
(22) Date of filing: 07.10.1999
(51) Int. Cl.: B41M 3/14, B32B 7/02, D21H 21/44

(54) **FORGERY PREVENTION SHEET**

(30) Priority: 07.10.1998 JP 29905698
(71) Applicant: Dynic Corporation, Kyoto-shi, Kyoto 615-0812 (JP)
(72) Inventor: HANEDA, Akira Dynic Corporation, Chiyoda-ku Tokyo 101-0003 (JP); KURIHARA, Hideo Taihei Paper Manufact. Co., Ltd., Chiyoda-ku Tokyo 101-047 (JP)
(74) Representative: Dealtry, Brian
(86) International application number: JP9905536
(87) International publication number: WO0020220

(57) **Abstract**

A multi-layered sheet giving a forgery prevention effect by developing different appearances when the upper surface or lower surface is irradiated with an ultraviolet ray. In a first embodiment, fluorescence coloring layers respectively developing different hues are provided on the upper surface side and the lower surface side respectively, a fluorescence coloring layer on the upper surface side only develops a fluorescence color to permit observation from the upper surface when an ultraviolet ray is applied from the upper surface side, and at least a fluorescence coloring layer on the lower surface side develops a color to permit observation from the upper surface when an ultraviolet ray is applied from the lower surface side. In a second embodiment an opacity in an area extending from the upper surface to a fluorescence coloring layer is not lower than 97% and that in an area extending from the lower surface to a fluorescence coloring layer is not higher than 96%, and an ultraviolet radiation from the upper surface does not permit a printed pattern to be observed, whereas an ultraviolet radiation from the lower surface permits the printed pattern to be observed.

## Description

### Field of the Invention

The present invention relates to a forgery prevention sheet that may be used as a sheet of bank note, bills, checks, stock certificates, bonds, gift certificates, betting tickets on horse or bicycle race, various kinds of notes, various kinds of cards, passports, etc. having good forgery prevention effect. The forgery prevention sheet according to the present invention may be used as a tag label on big-name brands' care labels on clothing, on which a specific logotype or character representing its big-name brand may be printed with a unique visual pattern that can hardly be copied and forged.

### Background of the Art

The above-exemplified notes and papers are valuable and, therefore, should be prevented from being illegally copied, forged and altered by means of distinction between a genuine one and a counterfeit.

Japanese patent publication No.55(1980)-122100 discloses a forgery prevention sheet characterized by fluorescence fiber incorporated in paper making. This prior art does not provide a sufficient forgery prevention effect because it can not be judged as a counterfeit once incorporation of some fluorescent fiber is confirmed. Various attempts have been developed to provide more reliable forgery prevention effect.

Japanese patent publication No.5(1993)-98599 discloses a forgery prevention sheet in which special fiber (such as colored fiber, fluorescence fiber, thermochromic fiber, glass fiber) is incorporated into a paper base at predetermined position, in predetermined width.

Japanese patent publication No.6(1994)-28709 discloses an information recognizable sheet in which a random pattern of natural or synthetic pulp, that has already been impregnated with fluorescer, is incorporated into a base carrier.

These prior arts provide improved forgery prevention effect. However, judgement of position and width of the special fiber (No.5-98599) and identification of the random pattern of the incorporated fluorescent pulp (No.6-287090) may be made only with special reader devices, by skilled operator. Therefore, these prior arts are not suitable to simple judgement at the shop counter, for example.

Accordingly, it is an object of the present invention to provide a novel forgery prevention sheet having an improved forgery prevention effect and allowing easy and quick judgement for genuine or forged one at the shop counter.

Generally, a ray of a longer wavelength has a greater penetration. This means that when comparing an ultraviolet ray that is irradiated to fluorescer and a visible ray emitted from the fluorescer, the latter has a greater penetration than the former. With recognition of such difference of ray transmissivity before and after the fluorescer, the inventors have made tests and study repeatedly to complete the present invention.

### DISCLOSURE OF THE INVENTION

To achieve the above-described objects, the present invention has the following framework:
(1) A forgery prevention sheet comprising a multi-layered sheet having at least two layers, characterized in that a first fluorescence layer including a first fluorescer is positioned near the upper surface whereas a second fluorescence layer including a second fluorescer is positioned near the lower surface, said first fluorescer of said first fluorescence layer being solely visible from the upper surface when irradiated with an ultraviolet ray from the top, whereas at least said second fluorescer of said second fluorescence layer being visible from the upper surface when irradiated with an ultraviolet ray from the bottom, said sheet providing different visible rays when the ultraviolet ray is applied to different surfaces of said sheet.
(2) A forgery prevention sheet according to claim 1 wherein said first fluorescence layer is a printed layer with an ink including said first fluorescer, a cross-sectional area from the upper surface to said first fluorescence layer having opacity of 92% or less.
(3) A forgery prevention sheet according to claim 1 wherein said first fluorescer is internally added in said first fluorescence layer, a cross-sectional area from the upper surface to said first fluorescence layer having opacity of 82% or less.
(4) A forgery prevention sheet according to claim 1 wherein said second fluorescence layer is a printed layer with an ink including said second fluorescer, a cross-sectional area from the upper surface to said second fluorescence layer having opacity of 97% or more, another cross-sectional area from the lower surface to said second fluorescence layer having opacity of 96% or less.
(5) A forgery prevention sheet according to claim 1 wherein said second fluorescer Is internally added in said second fluorescence, a cross-sectional area from the upper surface to said first fluorescence layer having opacity of 89% or more, another cross-sectional area from the lower surface to said second fluorescence layer having opacity of 75% or less.
(6) A forgery prevention sheet according to any one of claims 1-5 wherein a cross-sectional area from the lower surface to said first fluorescence layer has opacity of 92% or more so that when irradiated from the lower surface, said second fluorescence of said second fluorescence is visible but said first fluorescence of said first fluorescence layer can not be viewed.
(7) A forgery prevention sheet according to any one of claims 1-6 wherein each of said first and second fluorescence layers is formed by printing the upper or lower surface of a paper layer with an ink including said first or second fluorescer, by laminating a thin film printed with an ink including said first or second fluorescer on the upper or lower surface of a paper layer, or by incorporating and distributing said first or second fluorescer in a paper layer.
(8) A forgery prevention sheet according to any one of claims 1-7 wherein the uppermost layer includes no fluorescer, said first fluorescence layer being positioned just below said uppermost layer.
(9) A forgery prevention sheet according to any one of claims 1-8 wherein the lowermost layer includes no fluorescer, said second fluorescence layer being positioned just above said lowermost layer.
(10) A forgery prevention sheet according to any one of claims 1-9 wherein an intermediate layer including no fluorescer is positioned between said first and second fluorescence layers.
(11) A forgery prevention sheet comprising a multi-layered sheet having at least two layers, characterized in that a bottom of the uppermost layer or a top of the lowermost layer is printed with a fluorescent ink to provide a predetermined print pattern, said fluorescent ink emitting a visible coloring ray when irradiated with an ultraviolet ray, a cross-sectional area from the upper surface to said print pattern having opacity of 97% or more, another cross-sectional area from the lower surface to said print pattern having opacity of 96% or less, said print pattern being not visible when irradiated with ultraviolet ray from the top but visible when Irradiated from the bottom.
(12) A forgery prevention sheet according to claim 11 wherein a cross-sectional area from the lower surface to said print pattern is 92% or less.

### BRIEF DESCRIPTION OF THE DRAWINGS

Figs. 1 (A)-(F) are cross-sections of forgery prevention sheets in accordance with a first embodiment of the present invention;
Fig. 2(A) is a cross-section of a paper used in Test 1 whereas Fig. 2(B) is a cross-section of a paper used in Test 2 and Test 3;
Fig. 3 is an explanatory view of a forgery prevention sheet shown in Fig. 1(F) with indication of areas (a)-(d); and
Figs. 4(A)-(C) are cross-sections of forgery prevention sheets in accordance with a second embodiment of the present invention.

### DETAILED DESCRIPTION OF THE PREFERRED EMBODIMENT

A forgery prevention sheet in accordance with a first embodiment of the present invention comprises a multi-layered sheet having at least two layers, which is characterized in that a first fluorescence layer including a first fluorescer is positioned near the upper surface whereas a second fluorescence layer including a second fluorescer is positioned near the lower surface, said first fluorescer of said first fluorescence layer being solely visible from the upper surface when irradiated with an ultraviolet ray from the top, whereas at least said second fluorescer of said second fluorescence layer being visible from the upper surface when irradiated with an ultraviolet ray from the bottom, said sheet providing different visible rays when the ultraviolet ray is applied to different surfaces of said sheet.

A fluorescer is organic or inorganic material which provides a fluorescent light when irradiated with an ultraviolet ray from an ultraviolet lamp. For example, the fluorescer may be water-based or solvent-based fluorescent dye including diaminostilbene, coumarin, oxazol, pyrazoline, etc. Examples of fluorescent pigment that may also be used as the fluorescer in the present invention include sulfide pigment such as CaS:Bi, SrS:Sm:Ce, ZnS:Ag, ZnS:Cu, ZnS:Cu:Co and oxygen acid chloride such as Sr₅(PO₄)₃Cl:Eu, 3(Ba,Mg)·8Al₂O₃:Eu, ZnO:Zn, Zn₂SiO₄:Mn, Zn₂GeO₄:Mn, YVO₄:Eu, Y₂O₂S:Eu, 0.5MgF₂:3.5MgO·GeO₂:Mn. Any afterglowing pigment may also be used as the fluorescer in the present invention.

Each layer of the multi-layered sheet may be paper, fabric, non-woven fabric, woven fabric, plastic film, plastic coated layer, etc. The multi-layered sheet may be any desired combination of these layer material.

In the first embodiment of the present invention, at least two different kinds of fluorescer are used, which are distributed at different layer positions in thickness of the multi-layered sheet. Distribution of the fluorescer in the respective layer positions may be made by any desired process. For example, the layer surface is printed with an ink including the fluorescer. A thin film printed with an ink including the fluorescer may be laminated on the layer surface. A separate sheet made of fluorescer may be laminated at any layer position in the multi-layered sheet The fluorescer may be internally added into a base material of the layer. Among them, printing with a fluorescent ink or incorporation of fluorescer is preferred in most cases, because such process may be done at relatively low cost, yet providing a sufficient coloring effect.

On the other hand, the multi-layered sheet having both surfaces printed with a fluorescent ink is relatively easy to be forged. Accordingly, when one of upper and lower surfaces is directly printed with a fluorescent ink, it is preferable that another fluorescer is printed on the inner surface of the upper or lower layer, or a film printed with another fluorescent ink is laminated in such manner that the printed surface does not comprise the upper/lower surface of the multi-layered sheet, or another fluorescer is internally added into a layer. When one or both surfaces of the multi-layered sheet is to be printed by after treatment, it is preferable that a layer providing the surface(s) to be printed does not include the fluorescer for better printing quality.

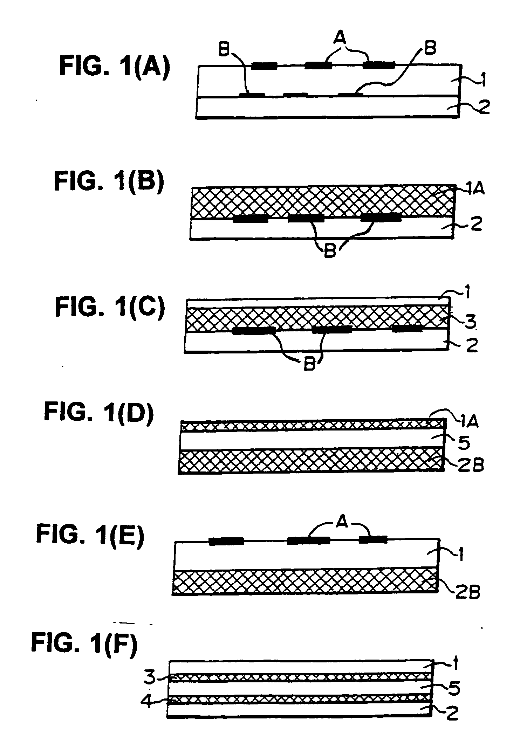

Incorporation of the fluorescer into a paper layer may be done by usual paper-making process with incorporation by 0.01-5.0% of fluorescent dye or pigment which may be in the form of filament or ink coated on a thin film or paper. Such process is known and, therefore, needs no further description. Figs. 1(A)-(F) are cross-sections of forgery prevention sheets in accordance with a first embodiment of the present invention. Fig. 1(A) shows an example in which a fluorescer A is printed in a desired pattern on the top of an upper layer 1, whereas another fluorescer B which fluoresces to provide a hue different from the fluorescer A is printed in a pattern different from the print pattern of the fluorescer A on the bottom of the upper layer 1 or the top of a lower layer 2.

Fig. 1(B) shows another example in which the first fluorescer A is internally added into an upper layer 1 so that the upper layer 1 itself may be deemed as a fluorescent layer 1A, and the second fluorescer B is printed on the bottom of the upper layer 1 or the top of a lower layer 2.

Fig. 1(C) shows still another example in which a fluorescent layer 3 including the first fluorescer A is laminated beneath an upper layer 1 that is a paper made by incorporation of no fluorescer, and the second fluorescer B is printed on the bottom of the fluorescent layer 3 or the top of a lower layer 2.

Fig. 1(D) shows still another example in which the first fluorescer A is internally added into an upper layer to form an upper fluorescent layer 1A, the second fluorescer B is internally added into a lower layer to form a lower fluorescent layer 2B, and a buffer layer 5 is interposed between the upper and lower fluorescent layers 1A and 2B. Positioning of the buffer layer 5 between the upper and lower fluorescent distributing areas or layers is preferable, because the buffer layer relieves fluorescence from the first fluorescer A from being interfered with another fluorescence from the second fluorescer B. In other words, the buffer layer functions to emphasize a contrast between fluorescence from the first and second fluorescers A and B.

Fig. 1(E) shows still another example in which the first fluorescer A is printed in a desired pattern on the top of an upper layer 1, and the second fluorescer B is internally added into a lower layer to form a lower fluorescent layer 2B. In this example and in the above-described example shown in Fig. 1(A), the upper paper layer 1 itself would act as a buffer layer.

Fig. 1(F) shows still another example in which a fluorescent layer 3 including the first fluorescer A is laminated beneath an upper layer 1 that is a paper made by incorporation of no fluorescer, whereas another fluorescent layer 4 including the second fluorescer B is laminated above a lower layer 2 that is a paper made by incorporation of no fluorescer, and a buffer layer 5 is interposed between these fluorescent layers 3 and 4. In the examples shown in Fig. (C) and Fig. 1(F), the fluorescers A, B are located in the interior of the multi-layered sheet, which will not affect adherence of a printing ink on both surfaces of the sheet to make sure good printing quality. Accordingly, these examples are most preferable when both surfaces are to be printed.

Each of these examples may be modified to have an upside-down structure. The first and second fluorescers A, B provides different hues of fluorescence when irradiated with an ultraviolet ray. These fluorescers may provide monochromatic or multicolor light.

In the forgery prevention sheet according to the first embodiment of the present invention such as shown in Figs. 1(A)-(F), only the first fluorescer A becomes visible when the sheet is irradiated with an ultraviolet ray from the top, whereas only the second fluorescer B or both fluorescers A and B becomes visible when irradiated with an ultraviolet ray from the bottom. Requirements (opacity) for achieving this phenomenon will be described in reference to the following experimental data.

### 〈Tests 1〉

Calcium carbonate was added into wood pulp (NBKP 10% + LBKP 90%) in an amount of 15% to the pulp weight. The resulting pulp was subjected to the usual paper making process to produce paper of fine quality of 20-210g/m² basis weight. The surface of the paper was then coated with sizing agent and starch to prepare various sample paper. The opacity of each sample paper was measured in accordance with the method described in JIS (Japanese Industrial Standards) P8138 entitled "Opacity of Paper".

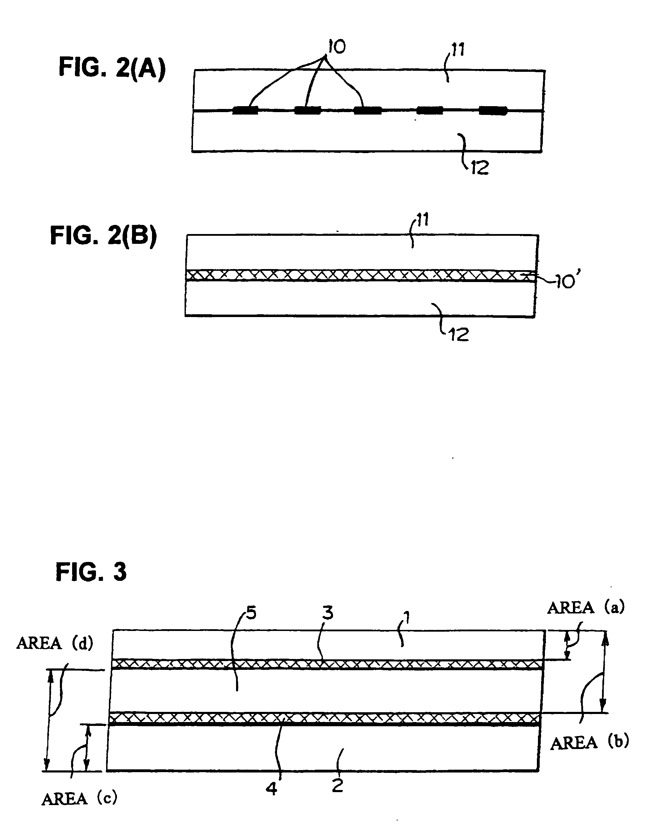

Red-color fluorescer particles (manufactured and sold as "YS-A" by Nemoto & Co., Ltd.) was incorporated into a medium in an amount of 10% to produce an ink, which was printed, with a gravure printer, onto one surface of the sample paper having various basis weight in woven pattern. Onto the printed surface of the sample paper was laminated, with adhesive, another sample paper having no print, thereby producing various test sample sheets. As shown in Fig. 2(A), each test sample sheet comprises an upper paper layer 11 having the woven pattern print (fluorescence layer) 10 at the bottom was laminated onto a lower paper layer 12.

Regarding the respective test sample sheets, an ultraviolet rays from 4W or 6W black light lamp was applied, in a well-light or dark room, to the upper or lower surface to observe fluorescence by naked eye observation from the top. The results of observation are shown in the following Tables 1-8. A flashlight sold as "LK-K3400" by Sanyo Electric Co., Ltd. equipped with a 4W lamp sold as "National FL4BL-B" was used as the 4W black light lamp. A flashlight sold as "M-06110-A" by NEC Home Electronics Co., Ltd equipped with a 6W lamp sold as "National FL6BL-B" was used as the 6W black light lamp. Measurement with an illuminance meter sold as "TL-1" by Sanyo Electric Co., Ltd. proved that the well-lighted room has 25 LX illuminance and the darkroom has 0.1 LX illuminance.

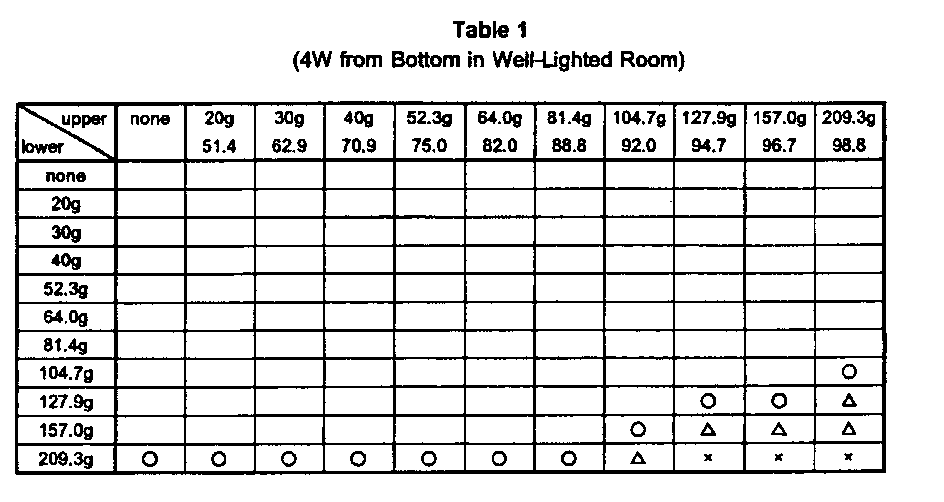

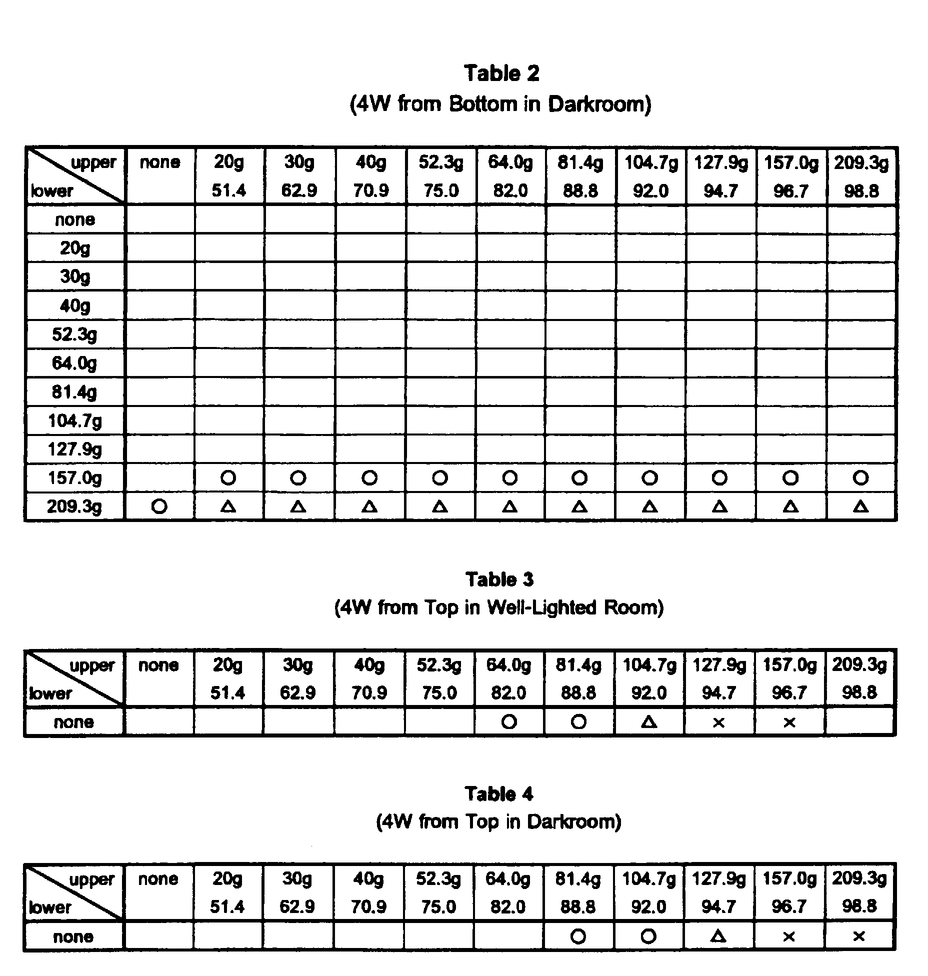

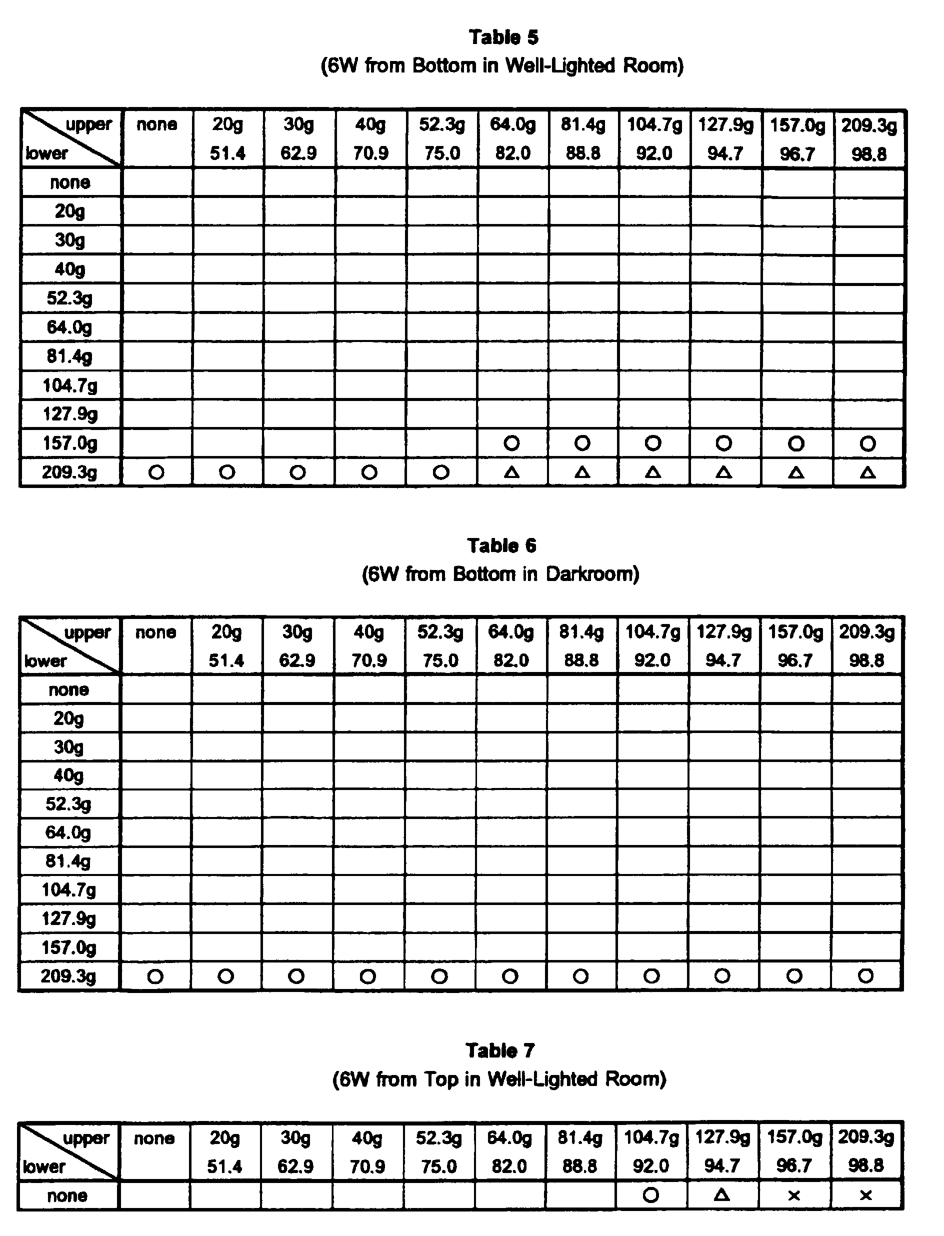

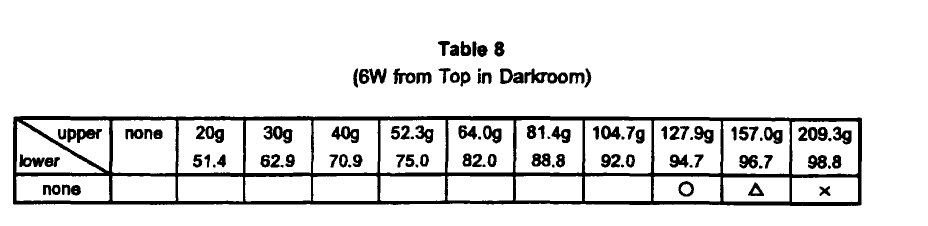

In these tables, "○ " symbol indicates that fluorescence of the printed woven pattern was clearly observed, "△" symbol indicates that such was dimly observed and "x" symbol indicates that such was hardly observed (which is likewise applicable in the following tables). In the respective columns indicating the upper paper layer 11, the basis weight of paper is identified in the upper section and its measured opacity is shown in the lower section.

### 〈Tests 2〉

Nylon filaments of 50 micron diameter, including the red-color fluorescer particles used in Tests 1, was cut into segments of 3-5mm length, which was incorporated in an amount of 0.25% of pulp in paper-making to produce a fluorescence layer having basis weight of 20g/m² and opacity of 44.8%. The sample paper of various basis weight prepared in Tests 1 was used as an upper layer and a lower layer, between which the fluorescence layer was interposed to make three-layer paper in accordance with known paper making process. The test samples thus obtained were like that shown in Fig. 2(B) having a three-layered construction comprising which an upper paper layer 11, a lower paper layer 12 and a fluorescence layer 10 interposed therebetween. The respective test samples were subjected to observation in the same manner as in Tests 1, and the results are shown in the following Tables 9-16.

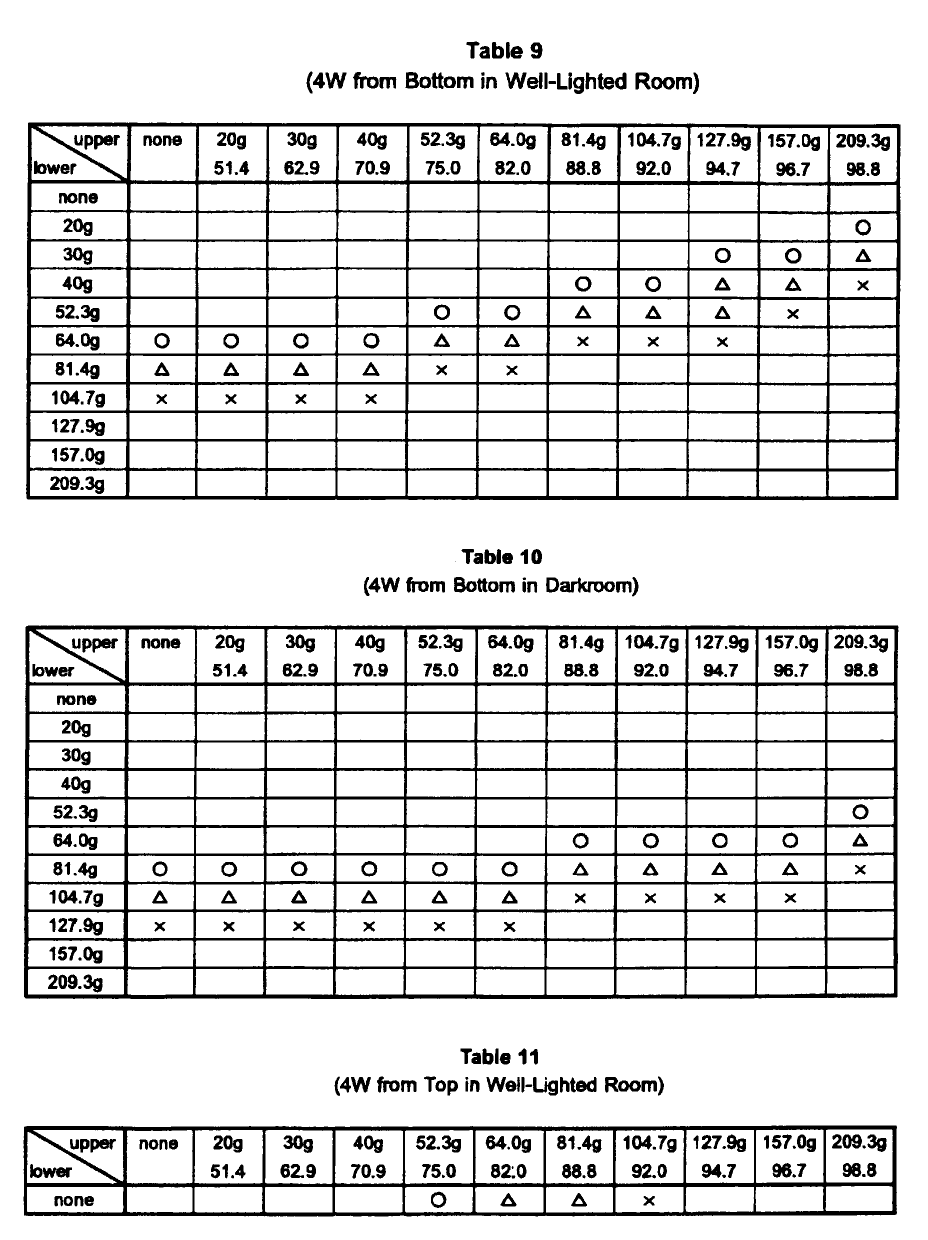

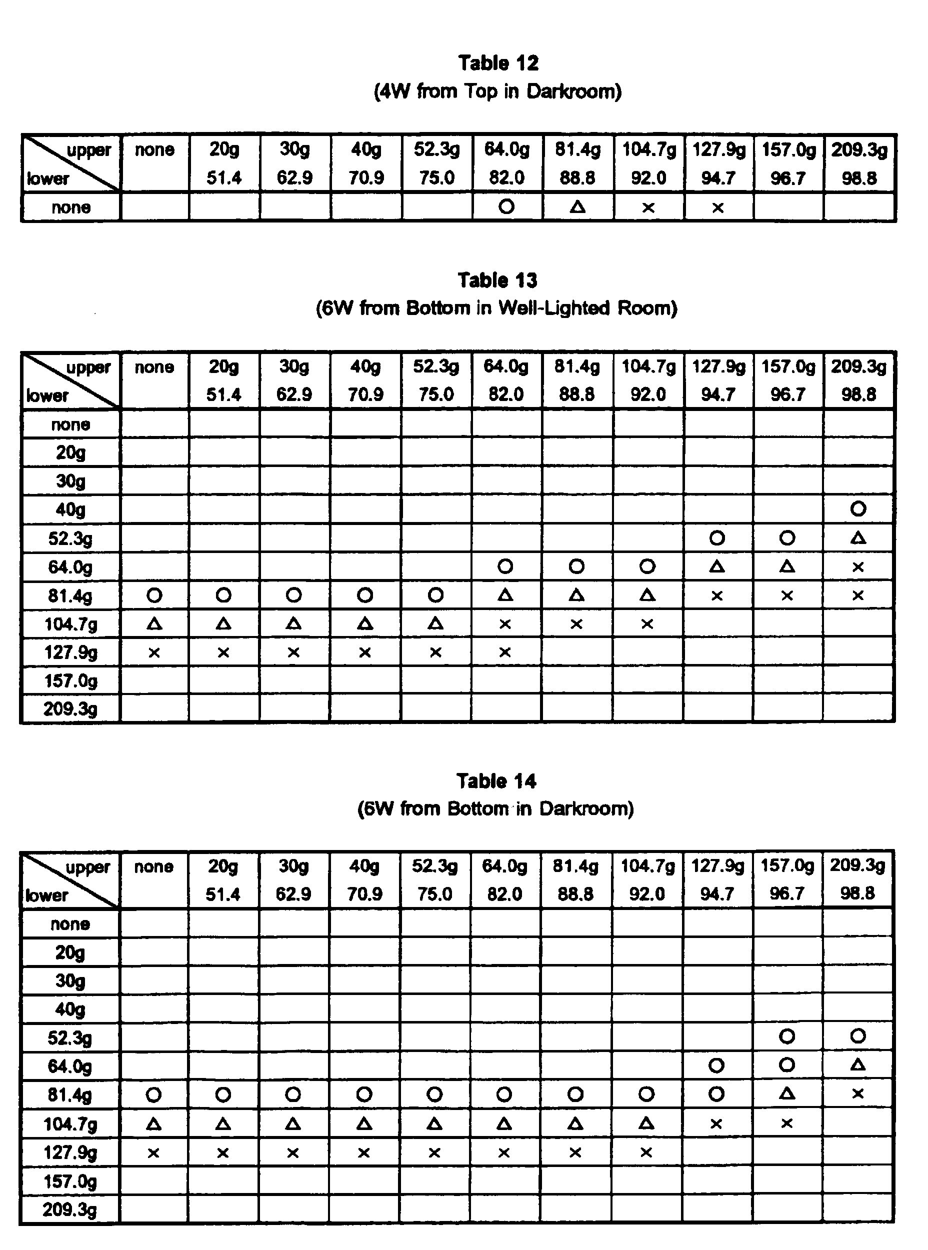

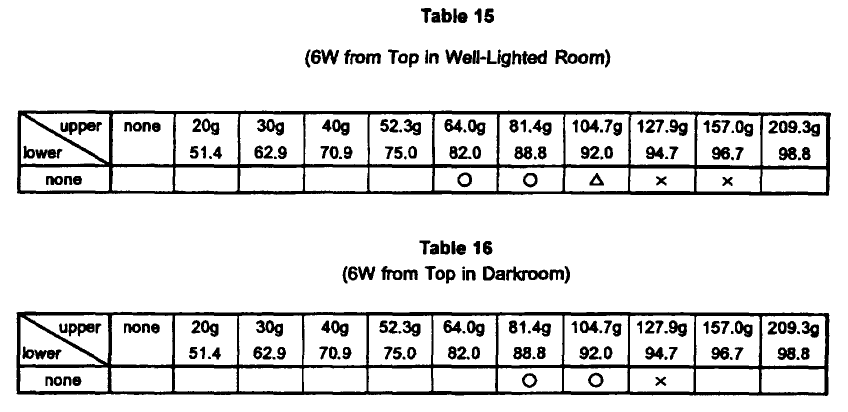

### 〈Tests 3〉

Another tests were made in the same manner as in Tests 2 except that the fluorescent fiber was incorporated in an amount of 0.8% of pulp to prepare a fluorescence layer 10' having basis weight of 60g/m². The results of observation are shown in the following Tables 17-24. The opacity of the fluorescence layer 10' used in Tests 3 was 83.9%.

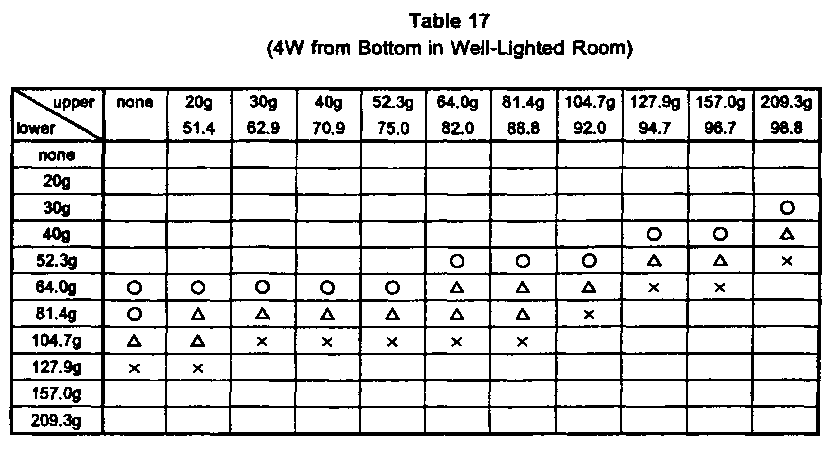

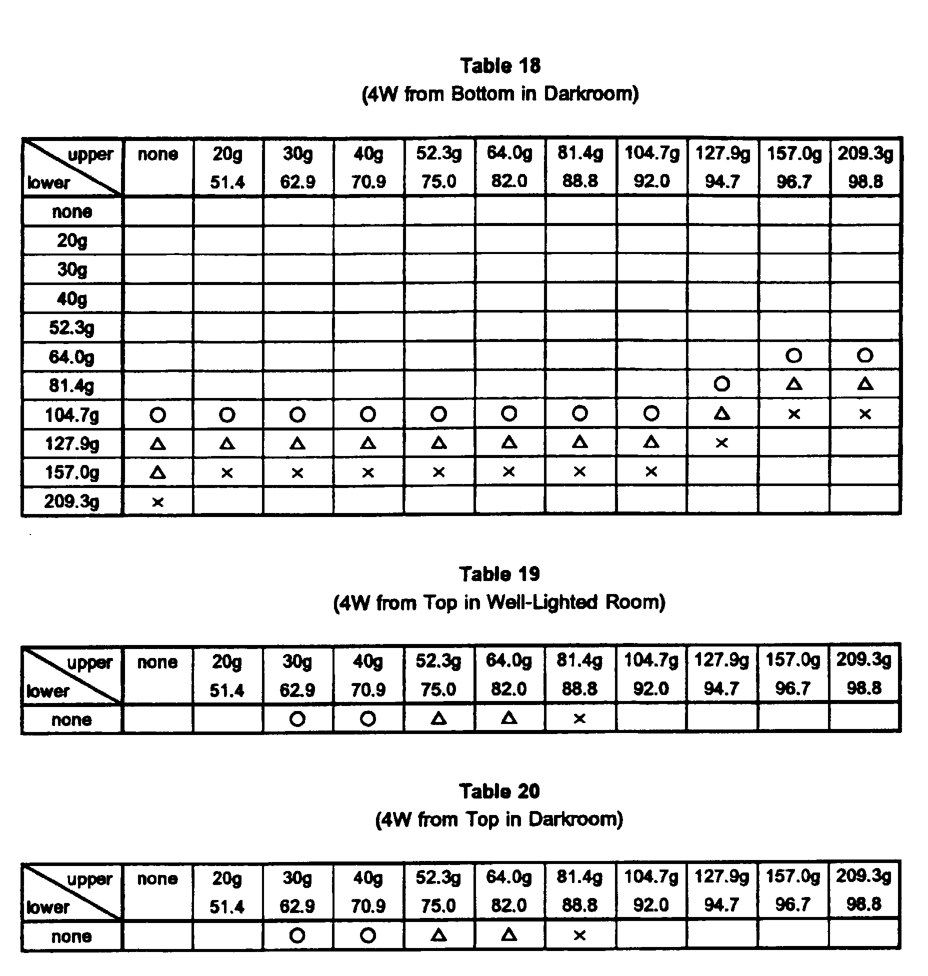

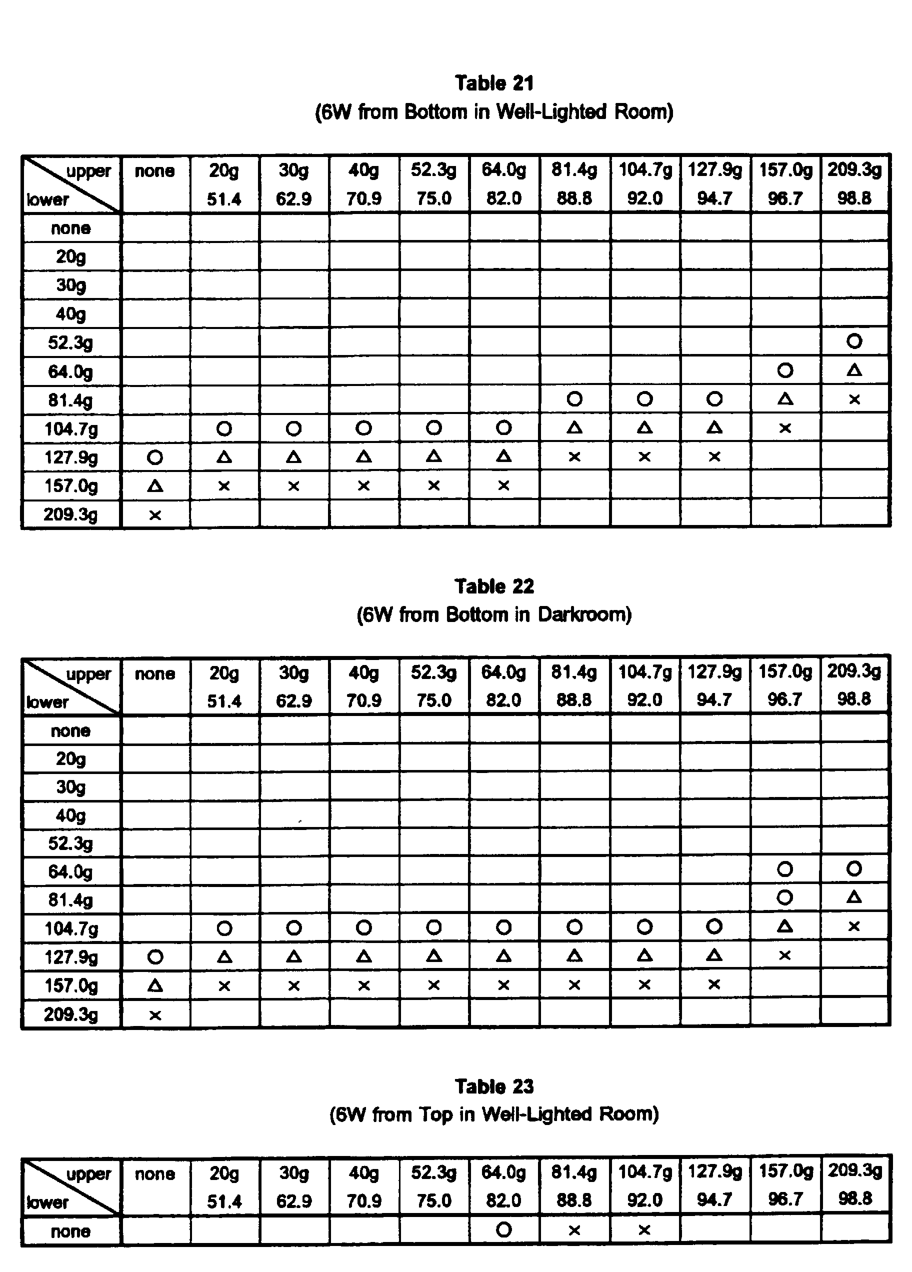

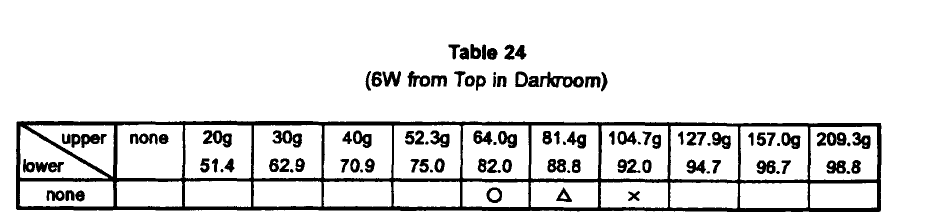

In the forgery prevention sheet having the structure of Fig. 1(F), in order that a fluorescent light from the fluorescer A contained in the fluorescence layer 3 can be observed from the top when an ultraviolet ray is applied to the upper surface, it is necessary that an area from the upper surface to the fluorescence layer 3, that is an area (a) in Fig. 3 comprising the upper paper layer 1 has a specific opacity range. From the observation results of tests which were made under most handicapped conditions (i.e., 4W irradiation in well-lighted room), to meet the above requirements, the fluorescence layer 3 should have opacity of 92% or less when the layer 3 is made by printing of the fluorescer A (Table 3) or of 82% or less, preferably 75% or less, when the fluorescer A is internally added in the layer 3 (Tables 11 and 19).

The forgery prevention sheet according to the first embodiment of the present invention should meet the requirement that, when an ultraviolet ray is applied to the upper surface, the fluorescer A in the fluorescence layer 3 develops a visible ray, but the fluorescer B in the lower fluorescence layer 4 is not observed from the top. To meet such requirement, an area (b) in Fig. 3 which extends from the upper surface to the fluorescence layer 4 should have opacity of 97% or more when the layer 4 is made by printing of the fluorescer B (Table 8), or of 89% or more (Table 24), preferably 94% or more (Table 16), when the fluorescer B is internally added in the layer 4. These opacity data can be understood from the observation results of tests under most advantageous conditions (i.e., 6W irradiation in darkroom).

On the other hand, when ultraviolet ray irradiation is applied to the lower surface of the forgery prevention sheet according to the first embodiment of the present invention, at least the fluorescer B in the layer 4 must be observed from the top. To meet this requirement, there should be a particular correlation between opacity of an area (c) in Fig. 3 extending from the lower surface to the fluorescence layer 4 which comprises the lower paper layer 12 and opacity of the area (b) from the fluorescence layer 4 to the upper surface. Here, reference is made to the observation results of tests in which an ultraviolet ray was irradiated from the bottom under most handicapped conditions (i.e., 4W irradiation in well-lighted room), which are shown in Tables 1, 9 and 17.

As described above, the results of Tests 1 shown (Table 8) indicate that the area (b) should have opacity of 97% or more, when the fluorescence layer 4 comprises a print pattern of the fluorescer B. However, in reference to Table 1, if opacity of the area (b) is 98.8% and opacity of the area (c) is 96.7% or less, a ray from the fluorescer B in the layer 4 can be observed. The results of Tests 2 (Table 16) indicate that the area (b) should have opacity of 94% or more, when the fluorescer B is incorporated in paper-making to form the layer 4, which is applied to the horizontal columns of Table 9 to reveal that a ray from the fluorescer B in the layer 4 can be observed when opacity of the area (b) is 94.7% and that of the area (c) is not greater than 75.0%, when the former is 96.7% and the latter is not greater than 70.9%, and when the former is 98.8% or more and the latter is not greater than 62.9%. The results of Tests 3 (Table 24) indicate that the area (b) should have opacity of 89% or more, when the fluorescer B is incorporated in paper-making to form the layer 4, which is applied to the horizontal columns of Table 17 to reveal that a ray from the fluorescer B in the layer 4 can be observed when opacity of the area (b) is 92.0% and that of the area (c) is not greater than 82.0%, when the former is 94.7% or 96.7% and the latter is not greater than 75.0%, and when the former is 98.8% and the latter is not greater than 70.9%.

Accordingly, it is understood that, when the layer 4 is a print pattern of the fluorescer B, opacity of the area (b) should be 97% or more and opacity of the area (c) should be 96% or less, preferably 92% or less. When the fluorescer B is incorporated in paper-making to form the layer 4, opacity of the area (b) should be 89% or more, preferably 94% or more, and opacity of the area (c) should be 75% or less, preferably 63% or less.

In the first embodiment of the present invention, it is preferable that, when irradiated from the bottom, only fluorescence from the fluorescer B in the layer 4 is visible from the top and the fluorescer A in the layer 3 can not be observed. This develops different fluorescence patterns when irradiated from the top and from the bottom, which makes it easier to distinguish a genuine one from a counterfeit. Specific corelationship between opacity of an area (d) in Fig. 3 extending from the lower surface to the layer 3 and opacity of the area (a) will be a requirement for the fluorescer A in the layer 3 becoming invisible with irradiation from the bottom.

As described before, the results of Tests 2 indicate that opacity of the area (a) should be 82% or less, which is applied to the horizontal columns of Table 14 to reveal that the fluorescer A does not develop a visible ray with irradiation of ultraviolet ray from the bottom, when the area (d) has opacity of 92% or more. In Tests 3, the area (a) should have opacity of not greater than 75%, which is applied to the horizontal columns of Table 22 to reveal that the fluorescer A does not develop a visible ray with irradiation of ultraviolet ray from the bottom, when the area (d) has opacity of 95% or more.

When paper is manufactured in the same manner, generally, its opacity will increase with basis weight. Accordingly, in the foregoing tests, paper samples having various opacity were manufactured by varying basis weight. However, what is important in the present invention is not basis weight but opacity of the respective layers of the multi-layered forgery prevention sheet. Other than varying paper basis weight, opacity of the paper may be controlled by changing the beating degree, by differently compounding such filler ingredients as calcium carbonate, titanium oxide and talc, by making or not making a post calendering process, by coating or not coating with transparency-improving agent, etc. Incidentally, cigarette paper (having 78% opacity at 24g/m² basis weight) and India paper (having 80% opacity at 29g/m² basis weight and 82-88% opacity at 42g/m² basis weight) are typical examples of paper having low basis weight but relatively high opacity. Such kind of paper includes the filler ingredients at a ratio higher than usual to improve opacity, even with the same basis weight. A typical example of low opacity paper is glassine paper that is used for wrapping individual doses of powdered medicine or as a released paper. The glassine paper has 22% opacity at 31g/m² basis weight and 53% opacity at 70g/m² basis weight. The manufacturing of glassine paper promotes beating in raw paper making process, followed by extreme super-calendering process, to lower opacity.

The first and second fluorescence layers in the forgery prevention sheet according to the first embodiment of the present invention may be formed by laminating a thin film which has been printed with an ink including a fluorescer. Examples of the sheet having such structure were also subjected to experimental tests in the like manner as in Tests 1. The results of observation were approximate to those obtained in Tests 1.

Although 4W and 6W black light were used in the tests, 10W, 15W and 20W black light may also be available in the commercial market. However, 15W and 20W black light may cause a great damage to human eyes. 10W black light lamp is too long to be easily handed at the shop counter. Accordingly, it is practically meaningful to adopt data which were obtained in the experiments using 4W and 6W black light.

The first embodiment of the present invention is particularly preferable when the sheet is used as bank notes or securities which is required to have extremely high anti-counterfeiting effect. Apart from such use, when the sheet is to be used as a tag label on big-name brands' clothes and accessories with a print of a logotype or character representing its big-name brand, it is preferable that the sheet has a simple structure with a single fluorescer. For such use, preferably, judgement of truth or falsehood may be done in a simple manner, yet providing a practically sufficient anti-counterfeiting effect. The second embodiment of the present invention is particularly suitable for such use, which will be described below.

In accordance with the second embodiment of the present invention, there is provided a forgery prevention sheet comprising a multi-layered sheet having at least two layers, characterized in that a bottom of the uppermost layer or a top of the lowermost layer is printed with a fluorescent ink to provide a predetermined print pattern, said print pattern being not visible when irradiated with an ultraviolet ray from the top but visible when irradiated from the bottom. In this embodiment, the print pattern formed by the fluorescent ink may be a logotype or character representing a specific big-name brand. When the sheet is used as a tag attached to the big-name brand's clothes or accessories, the print pattern is not visible at first glance but may be observed when irradiated with an ultraviolet ray from the bottom. Accordingly, if an infringer should make a tag without a fluorescent print pattern, it is readily proved to be a counterfeit because the print pattern is not observed when irradiated with an ultraviolet ray from the bottom. Further, the fluorescent print pattern is located in the middle of thickness of the sheet, which means that manufacturing of the sheet is not easy and costs a great deal, so that a third party would hesitate to be a forger.

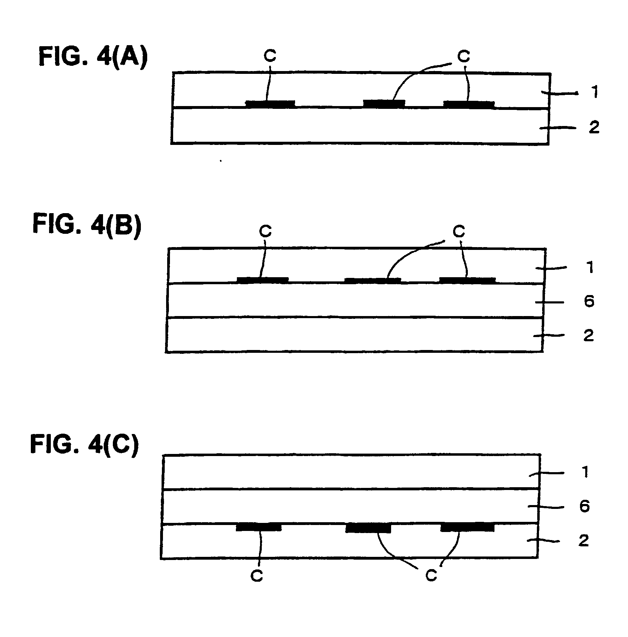

Figs. 4(A)-(C) are cross-sections of forgery prevention sheets in accordance with the second embodiment of the present invention. Fig. 4(A) shows a double-layered sheet comprising an upper layer 1 and a lower layer 2, the bottom of the former or the top of the latter being printed with a fluorescent ink in a predetermined pattern C. Fig. 4(B) shows a triple-layered sheet comprising an upper layer 1, a lower layer 2 and an intermediate layer 6 between the upper and lower layers 1, 2, in which the bottom of the upper layer 1 or the top of the intermediate layer 6 has the print pattern C. Fig. 4(C) shows a triple-layered sheet comprising an upper layer 1, a lower layer 2 and an intermediate layer 6 between the upper and lower layers 1, 2, in which the bottom of the intermediate layer 6 or the top of the lower layer 2 has the print pattern C.

In the triple-layered sheet such as shown in Figs. 4(B) and (C) including the intermediate layer 6, both the upper and lower layers 1 and 2 may be of paper and the intermediate layer 6 may be of non-woven or woven fabric or plastic film. In another example, plastic coating is applied to both surfaces of the intermediate layer 6 made of non-woven or woven fabric or plastic film having the print pattern C at the upper or lower surface, to form upper and lower layers 1 and 2. In such manner, the sheet may be given appearance, feeling and peel-off strength suitable to a particular use. When both the upper and lower layers 1 and 2 are formed as coating layer of thermo-sensitive paint, the resulting sheet may be presented as a thermal and luminescent label.

In addition to the print pattern of the fluorescent ink, there may be formed another print pattern with a transparent ink so that the sheet has a watermark. This further improves the forgery prevention effect.

In accordance with the second embodiment of the present invention, the fluorescent print pattern is not observed with ultraviolet ray irradiation from the top but may be observed with irradiation from the bottom. To meet this function, an area from the upper surface to the print pattern should have a specific opacity range. This opacity requirement corresponds to the opacity requirement applicable to the area (b) in the first embodiment for achieving that the fluorescence layer 4 is not observed when irradiated from the top. Accordingly, from the results shown in Table 8, opacity of this area should be 97% or more. To meet the above function, another area from the lower surface to the print pattern should also have a specific opacity range. This opacity requirement corresponds to the opacity requirement applicable to the area (c) in the first embodiment for achieving that the fluorescence layer 4 is observed when irradiated from the bottom. Accordingly, from the results of investigation described before, opacity of this area should be 96% or less, preferably 92% or less.

### INDUSTRIAL APPLICABILITY

In accordance with the forgery prevention sheet of the present invention, it provides different luminescence in response to irradiation of an ultraviolet ray from the top and from the bottom, so that a forgery may readily be distinguished from a genuine one.

Accordingly, the present invention is particularly useful for bank note, bills, checks, stock certificates, bonds, gift certificates, betting tickets on horse or bicycle race, various kinds of notes, various kinds of cards, passports and tag labels on big-name brands' clothes and accessories with logotype or character representing its big-name brand, which requires to have good anti-counterfeiting effect by readily distinction of forgery from genuine one.

## Claims

1. A forgery prevention sheet comprising a multi-layered sheet having at least two layers, characterized in that a first fluorescence layer including a first fluorescer is positioned near the upper surface whereas a second fluorescence layer including a second fluorescer is positioned near the lower surface, said first fluorescer of said first fluorescence layer being solely visible from the upper surface when irradiated with an ultraviolet ray from the top, whereas at least said second fluorescer of said second fluorescence layer being visible from the upper surface when irradiated with an ultraviolet ray from the bottom, said sheet providing different visible rays when the ultraviolet ray is applied to different surfaces of said sheet.

2. A forgery prevention sheet according to claim 1 wherein said first fluorescence layer is a printed layer with an ink including said first fluorescer, a cross-sectional area from the upper surface to said first fluorescence layer having opacity of 92% or less.

3. A forgery prevention sheet according to claim 1 wherein said first fluorescer is internally added in said first fluorescence layer, a cross-sectional area from the upper surface to said first fluorescence layer having opacity of 82% or less.

4. A forgery prevention sheet according to claim 1 wherein said second fluorescence layer is a printed layer with an ink including said second fluorescer, a cross-sectional area from the upper surface to said second fluorescence layer having opacity of 97% or more, another cross-sectional area from the lower surface to said second fluorescence layer having opacity of 96% or less.

5. A forgery prevention sheet according to claim 1 wherein said second fluorescer is internally added in said second fluorescence, a cross-sectional area from the upper surface to said first fluorescence layer having opacity of 89% or more, another cross-sectional area from the lower surface to said second fluorescence layer having opacity of 75% or less.

6. A forgery prevention sheet according to any one of claims 1-5 wherein a cross-sectional area from the lower surface to said first fluorescence layer has opacity of 92% or more so that when irradiated from the lower surface, said second fluorescence of said second fluorescence is visible but said first fluorescence of said first fluorescence layer can not be viewed.

7. A forgery prevention sheet according to any one of claims 1-6 wherein each of said first and second fluorescence layers is formed by printing the upper or lower surface of a paper layer with an ink including said first or second fluorescer, by laminating a thin film printed with an ink including said first or second fluorescer on the upper or lower surface of a paper layer, or by incorporating and distributing said first or second fluorescer in a paper layer.

8. A forgery prevention sheet according to any one of claims 1-7 wherein the uppermost layer includes no fluorescer, said first fluorescence layer being positioned just below said uppermost layer.

9. A forgery prevention sheet according to any one of claims 1-8 wherein the lowermost layer includes no fluorescer, said second fluorescence layer being positioned just above said lowermost layer.

10. A forgery prevention sheet according to any one of claims 1-9 wherein an intermediate layer including no fluorescer is positioned between said first and second fluorescence layers.

11. A forgery prevention sheet comprising a multi-layered sheet having at least two layers, characterized in that a bottom of the uppermost layer or a top of the lowermost layer is printed with a fluorescent ink to provide a predetermined print pattern, said fluorescent ink emitting a visible coloring ray when irradiated with an ultraviolet ray, a cross-sectional area from the upper surface to said print pattern having opacity of 97% or more, another cross-sectional area from the lower surface to said print pattern having opacity of 96% or less, said print pattern being not visible when irradiated with ultraviolet ray from the top but visible when irradiated from the bottom.

12. A forgery prevention sheet according to claim 11 wherein a cross-sectional area from the lower surface to said pint pattern is 92% or less.
